# EUROPEAN PATENT APPLICATION

(11) **EP 4 429 369 A1**
(43) Date of publication of application: **11.09.2024**
(21) Application number: 22897909.2
(22) Date of filing: 25.11.2022
(51) Int. Cl.: H04W 72/04

(54) **COMMUNICATION METHOD AND APPARATUS**

(30) Priority: 29.11.2021 CN 202111433803
(71) Applicant: Huawei Technologies Co., Ltd., Shenzhen, Guangdong 518129 (CN)
(72) Inventor: ZHAI, Bangzhao, Shenzhen, Guangdong 518129 (CN); DING, Mengying, Shenzhen, Guangdong 518129 (CN); LI, Xinxian, Shenzhen, Guangdong 518129 (CN); PENG, Jinlin, Shenzhen, Guangdong 518129 (CN); ZHOU, Guohua, Shenzhen, Guangdong 518129 (CN)
(74) Representative: Maiwald GmbH
(86) International application number: PCT/CN2022/134228
(87) International publication number: WO 2023/093827

(57) **Abstract**

A communication method and apparatus are provided. The method includes: A terminal receives first signaling from a network device. The first signaling indicates at least one type of configuration. The terminal receives second signaling from the network device. The second signaling indicates a first configuration included in the at least one type of configuration. The terminal communicates with the network device based on the first configuration. The at least one type of configuration includes at least one of the following: a quantity of PDSCHs, a quantity of PUSCHs, a quantity of CORESET pools for DCI blind detection, a quantity of transport layers for space division multiplexing, a quantity of tracked TCI states, or a quantity of HARQ processes. According to the method and the apparatus in this application, flexible and efficient switching between resources in a baseband processing capability of the terminal can be implemented.

## Description

### CROSS-REFERENCE TO RELATED APPLICATIONS

This application claims priority to Chinese Patent Application No. 202111433803.2, filed with the China National Intellectual Property Administration on November 29, 2021 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In new radio (new radio, NR), to efficiently use frequency domain and space domain resources, solutions such as carrier aggregation (carrier aggregation, CA), dual connectivity (dual connectivity, DC), multi connectivity (multi connectivity, MC), and multiple transmission and reception point (multiple transmission reception point, multi-TRP) are proposed. The CA is used as an example. A base station may configure inter-carrier aggregation for a terminal by using radio resource control (radio resource control, RRC) signaling. Aggregation of a component carrier (component carrier, CC) 1 and a CC 2 is used as an example. The terminal may communicate with the base station through the CC 1 and the CC 2 simultaneously. For example, the terminal may receive physical downlink shared channels (physical downlink shared channel, PDSCH) from the base station through the CC 1 and the CC 2 simultaneously, for example, receive a PDSCH 1 through the CC 1, and receive a PDSCH 2 through the CC 2. A baseband processing capability of the terminal is limited. For example, the terminal can receive only five PDSCHs simultaneously. Therefore, in a solution such as CA, DC, MC, or multi-TRP, how to implement flexible switching between resources in the baseband processing capability is a problem to be resolved in this application.

### SUMMARY

This application provides a communication method and apparatus, to implement flexible switching between resources in a baseband processing capability of a terminal.

According to a first aspect, a communication method is provided. The method includes: A terminal receives first signaling from a network device, where the first signaling indicates at least one type of configuration. The terminal receives second signaling from the network device, where the second signaling indicates a first configuration included in the at least one type of configuration. The terminal communicates with the network device based on the first configuration, where the at least one type of configuration includes at least one of the following: a quantity of physical downlink shared channels PDSCHs, a quantity of physical uplink shared channels PUSCHs, a quantity of control resource set pools CORESET pools for downlink control information DCI blind detection, a quantity of transport layers for space division multiplexing, a quantity of tracked transmission configuration indication TCI states, or a quantity of hybrid automatic repeat request HARQ processes.

According to the foregoing design, the first signaling may be RRC signaling, and the network device may configure the at least one type of configuration for the terminal by using the RRC signaling. Then, the network device may indicate different configurations to the terminal in real time based on a network status, for example, a load and channel quality, so that the terminal works in an optimal configuration, to improve utilization of a baseband processing capability of the terminal, and improve uplink and downlink throughputs of the terminal.

In a possible design, the first signaling includes radio resource control RRC signaling, and the second signaling includes media access control MAC control element CE signaling or DCI signaling.

According to the foregoing design, the first signaling is the RRC signaling, and the second signaling is the MAC CE signaling or the DCI signaling. A signaling periodicity of the RRC signaling is long, and the terminal may semi-statically configure the at least one type of configuration for the terminal by using the RRC signaling. Because the MAC CE signaling or the DCI signaling may be sent in real time, the network device may send the MAC CE signaling or the DCI signaling to the terminal in real time based on a network status, to indicate the terminal to switch between different configurations, to improve utilization of the baseband processing capability of the terminal.

In a possible design, the first signaling indicates a correspondence between the at least one type of configuration of a first cell and an index, and the second signaling includes indication information of an index corresponding to the first configuration.

In this design, the network device may preconfigure at least one type of configuration for a cell. For example, the network device configures at least one type of configuration for the first cell, and notifies the terminal of the at least one type of configuration of the first cell by using RRC signaling. Then, the network device may indicate, based on a network status, the terminal to work in an optimal mode in the first cell, to improve utilization of the baseband processing capability.

In a possible design, the first signaling indicates a configuration of at least one bandwidth part BWP in a first cell, and the second signaling includes indication information of an index corresponding to the BWP.

In this design, the network device may preset corresponding configurations for different BWPs of the terminal, and notify the terminal. Then, the terminal device may activate a corresponding BWP based on a network status. When receiving an indication for activating a BWP, the terminal may activate the indicated BWP. In addition, a configuration corresponding to the activated BWP is determined based on preconfigured information, and the activated BWP works in the configuration that has a correspondence with the activated BWP. In this design, switching between different configurations may be indirectly indicated by using a current BWP switching solution, to reduce signaling overheads.

In a possible design, the method further includes: The terminal reports a terminal capability to the network device. The terminal capability includes at least one of the following capabilities: a capability for the PDSCH, a capability for the PUSCH, a capability for DCI blind detection on the CORESET pool, a transmission capability for space division multiplexing, a capability for the tracked transmission configuration indication TCI state, or a capability for the hybrid automatic repeat request HARQ process.

In this design, the network device may configure the at least one type of configuration for the terminal based on the terminal capability reported by the terminal, so that the at least one type of configuration configured by the network device for the terminal does not exceed the capability reported by the terminal. This avoids a case in which the configuration is unavailable, and improves configuration accuracy.

In a possible design, when there are a plurality of PDSCHs, the plurality of PDSCHs partially overlap or completely overlap in time domain; when there are a plurality of PUSCHs, the plurality of PUSCHs partially overlap or completely overlap in time domain; and when there are a plurality of CORESET pools, time units for DCI blind detection on the plurality of CORESET pools partially overlap or completely overlap.

According to a second aspect, a communication method is provided. The method is a method on a network device side corresponding to the method in the first aspect. For beneficial effects, refer to the descriptions of the first aspect. The method includes: A network device sends first signaling to a terminal, where the first signaling indicates at least one type of configuration. The network device sends second signaling to the terminal, where the second signaling indicates a first configuration included in the at least one type of configuration. The network device communicates with the terminal based on the first configuration.

The at least one type of configuration includes at least one of the following: a quantity of physical downlink shared channels PDSCHs, a quantity of physical uplink shared channels PUSCHs, a quantity of control resource set pools CORESET pools for downlink control information DCI blind detection, a quantity of transport layers for space division multiplexing, a quantity of tracked transmission configuration indication TCI states, or a quantity of hybrid automatic repeat request HARQ processes.

In a possible design, the first signaling includes radio resource control RRC signaling, and the second signaling includes media access control MAC control element CE signaling or DCI signaling.

In a possible design, the first signaling indicates a correspondence between the at least one type of configuration of a first cell and an index, and the second signaling includes indication information of an index corresponding to the first configuration.

In a possible design, the first signaling indicates a configuration of at least one bandwidth part BWP in a first cell, and the second signaling includes indication information of an index corresponding to the BWP.

In a possible design, the method further includes: The network device receives a terminal capability reported by the terminal. The terminal capability includes at least one of the following capabilities of the terminal: a capability for the PDSCH, a capability for the PUSCH, a capability for DCI blind detection on the CORESET pool, a transmission capability for space division multiplexing, a capability for the tracked transmission configuration indication TCI state, or a capability for the hybrid automatic repeat request HARQ process.

In a possible design, when there are a plurality of PDSCHs, the plurality of PDSCHs partially overlap or completely overlap in time domain; when there are a plurality of PUSCHs, the plurality of PUSCHs partially overlap or completely overlap in time domain; and when there are a plurality of CORESET pools, time units for DCI blind detection on the plurality of CORESET pools partially overlap or completely overlap.

According to a third aspect, a communication apparatus is provided. The apparatus is configured to implement the method in the first aspect, and includes corresponding function modules or units, which are configured to implement the steps in the method in the first aspect. Functions may be implemented by hardware, or may be implemented by hardware by executing corresponding software. The hardware or the software includes one or more modules or units corresponding to the foregoing functions.

According to a fourth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the first aspect.

According to a fifth aspect, a communication apparatus is provided. The apparatus is configured to implement the method in the second aspect, and includes corresponding function modules or units, which are configured to implement the steps in the method in the second aspect. Functions may be implemented by hardware, or may be implemented by hardware by executing corresponding software. The hardware or the software includes one or more modules or units corresponding to the foregoing functions.

According to a sixth aspect, a communication apparatus is provided. The apparatus includes a processor and a memory. The memory is configured to store a computer program or instructions, and the processor is coupled to the memory. When the processor executes the computer program or the instructions, the apparatus is enabled to perform the method in the second aspect.

According to a seventh aspect, a computer-readable storage medium is provided. The computer-readable storage medium stores a computer program or instructions, and when the computer program or the instructions are executed by an apparatus, the apparatus is enabled to perform the method in the second aspect.

According to an eighth aspect, a computer program product is provided. The computer program product includes a computer program or instructions, and when the computer program or the instructions are executed by an apparatus, the apparatus is enabled to perform the method in the first aspect or the second aspect.

According to a ninth aspect, a system is provided. The system includes the apparatus according to the third aspect or the fourth aspect and the apparatus according to the fifth aspect or the sixth aspect.

### BRIEF DESCRIPTION OF DRAWINGS

FIG. 1 is a diagram of an architecture of a mobile communication system to which this application is applied;
FIG. 2 is a flowchart of a communication method according to this application; and
FIG. 3 and FIG. 4 are diagrams of an apparatus according to this application.

### DESCRIPTION OF EMBODIMENTS

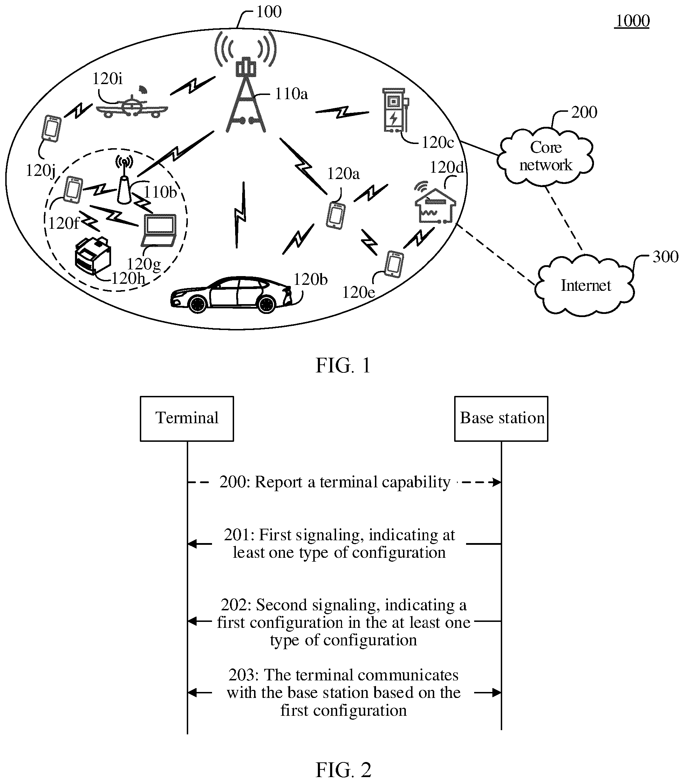

FIG. 1 is a diagram of an architecture of a communication system 1000 to which this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like. The radio access network device may alternatively be a module or unit that completes some functions of a base station, for example, may be a central unit (central unit, CU), or may be a distributed unit (distributed unit, DU). The CU completes functions of a radio resource control (radio resource control, RRC) protocol and a packet data convergence layer protocol (packet data convergence protocol, PDCP) of a base station, and may further complete a function of a service data adaptation protocol (service data adaptation protocol, SDAP). The DU completes functions of a radio link control (radio link control, RLC) layer and a media access control (media access control, MAC) layer of a base station, and may further complete functions of some physical (physical, PHY) layers or all physical layers. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form used by the radio access network device are not limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and a smart city. The terminal may be a mobile phone, a tablet computer, a computer, a wearable device, a vehicle, an uncrewed aerial vehicle, a helicopter, an airplane, a ship, a robot, a mechanical arm, a smart home device, or the like that has a wireless transceiver function. A specific technology and a specific device form used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, or a man-made satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal. In other words, communication between 110a and 120i is performed by using a wireless air interface protocol. Certainly, 110a and 120i may alternatively communicate with each other based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a base station function, and 120a to 120j in FIG. 1 may be referred to as communication apparatuses having a terminal function.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on the spectrum below 6 GHz and the spectrum above 6 GHz simultaneously. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes the function of the base station herein may be a control center in an application scenario, such as a smart grid, industrial control, intelligent transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered with by a signal from a neighboring cell.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a physical uplink control channel (physical uplink control channel, PUCCH) are merely examples of a downlink data channel, a downlink control channel, an uplink data channel, and an uplink control channel. In different systems and different scenarios, a data channel and a control channel may have different names. This is not limited in embodiments of this application.

For ease of understanding, a communication technology in this application is first described. It may be understood that the communication technology is also a part of content of this application.

### 1. Carrier Aggregation (carrier aggregation, CA)

Carrier aggregation is a technology that aggregates at least two component carriers (component carrier, CC) together to support a larger transmission bandwidth. To efficiently use fragmented spectrums, carrier aggregation supports aggregation between different component carriers, for example, aggregation between component carriers with a same bandwidth or different bandwidths, or aggregation between adjacent or non-adjacent component carriers on a same frequency band, or aggregation between component carriers on different frequency bands.

### 2. Dual connectivity (dual connectivity, DC)

A terminal maintains connections to two base stations and receives services simultaneously, and this is referred to as a dual-connectivity architecture. In the two base stations to which the terminal maintains connections, one base station is referred to as a master node (master node, MN), and the other base station is referred to as a secondary node (secondary node, SN). Optionally, a function of the master node is stronger than that of the secondary node. For example, the terminal may first establish a connection to the master node, and then establish a connection to the secondary node when a specific condition is met, for example, when a throughput of the terminal increases. A cell group in which the master node provides air interface resources for the terminal is referred to as a master cell group (master cell group, MCG), and a cell group in which the secondary node provides air interface resources for the terminal is referred to as a secondary cell group (secondary cell group, SCG). The master cell group may include at least one cell, the at least one cell includes a primary cell and a secondary cell, and there is one primary cell. The secondary cell group includes at least one cell, the at least one cell includes a primary secondary cell and a secondary cell, and there is one primary secondary cell.

It should be noted that, in the descriptions of this application, a cell group includes at least one cell. This may alternatively mean that the master cell group is associated with at least one cell. For example, the master cell group includes a primary cell. This may mean that the master cell group is associated with a primary cell. One cell may be associated with at least one carrier (carrier), or in other words, one cell corresponds to at least one carrier. In subsequent descriptions, an example in which one cell corresponds to one carrier, and the carrier may also be referred to as a CC is used for description.

In this application, a dual-connectivity terminal may implement aggregation between different carriers. For example, the terminal may communicate with a base station simultaneously through a carrier corresponding to at least one cell included in the master cell group corresponding to the master node and a carrier corresponding to at least one cell included in the secondary cell group corresponding to the secondary node. For example, the terminal receives PDSCHs from the base station simultaneously, and sends PUSCHs to the base station simultaneously. The foregoing may be referred to as aggregation of a carrier corresponding to a cell in the master cell group and a carrier of a cell corresponding to the secondary cell group. Alternatively, aggregation between carriers corresponding to at least two cells in the master cell group, aggregation between carriers corresponding to at least two cells in the secondary cell group, or the like may be implemented.

### 3. Multi-transmission reception point (multi-transmission reception point, multi-TRP)

Multi-TRP transmission allows one serving cell to schedule one terminal by using two TRPs. Multi-site coordinated transmission can resolve an inter-cell interference problem, increase a throughput of a cell edge user, and improve spectral efficiency at a cell edge. In other words, in a multi-TRP scenario, the terminal may communicate with a base station through a plurality of TRPs. As defined in 3GPP, a TRP is an antenna array that includes one or more antenna elements and that can be used by a network, and is located in a specific geographical location in a specific area. A signal generated by one base station may be transmitted through at least two TRPs in different positions. One serving cell corresponds to one carrier of the base station, and a signal of the carrier may be transmitted to one terminal of the serving cell through at least two TRPs. That is, one serving cell schedules one terminal through the at least two TRPs.

In a non-ideal backhaul scenario, a communication delay of two TRPs is at a millisecond level, which cannot be ignored compared with millisecond-level scheduling in NR. To ensure multi-site coordination performance, each TRP needs to send downlink control information (downlink control information, DCI) to schedule a PDSCH of the TRP for data transmission. This manner is usually referred to as a multi-downlink control information based multi-transmission reception point (multi-DCI based multi-TRP) transmission solution.

In a current solution, the terminal may report, by using an information element (for example, FeatureSetDownlinkPerCC) in RRC, whether the terminal supports multi-TRP on a corresponding CC. If a CC supports multi-TRP, the terminal may transmit data to a plurality of TRPs on the CC.

### 4. Multi connectivity (multi connectivity, MC)

The MC allows a terminal to use more than two different scheduling entities to schedule radio resources simultaneously, so as to support aggregation between a plurality of frequency bands, a plurality of base stations, or a plurality of radio access technologies (radio access technology, RAT). The MC may break through a limitation that a plurality of DUs in CA need to be co-sited or require ideal backhaul, and may also break through a limitation that DC can support only two scheduling entities at most, to further improve a network throughput, reduce interruption time during serving cell handover of a mobile terminal, and implement flexible network deployment. For example, in the MC, aggregation of NR FR1 (CC of 800 MHz)+NR FR1 (CC of 3.5 GHz)+NR FR2 (any CC of the NR FR2 frequency band) is supported, or aggregation of NR FR1 (any CC of an NR FR1 frequency band)+NR FR2 (CC of 28 GHz)+NR FR2 (CC greater than 52 GHz) is supported, or aggregation of CCs of LTE+NR FR1+NR FR2 is supported. For detailed descriptions of FR1 and FR2, refer to subsequent content.

### 5. Baseband processing capability of a terminal

A communication component of a terminal usually includes core parts such as a baseband processor, a radio frequency transceiver, a radio frequency front end, and an antenna.

A baseband processing architecture mainly includes a micro controller unit (micro controller unit, MCU) and a digital signal processor (digital signal processor, DSP). The MCU is configured to run baseband protocol stack code, for example, a media access control (media access control, MAC) layer scheduling algorithm and protocol procedure implementations such as radio resource control (radio resource control, RRC), service data adaptation protocol (service data adaptation protocol, SDAP), packet data convergence layer protocol (packet data convergence protocol, PDCP), radio link control (radio link control, RLC), MAC, and physical (physical, PHY) layers. The DSP is mainly configured to implement a PHY layer core algorithm, such as coding and decoding, Fourier transform/inverse Fourier transform, cyclic redundancy check, and channel estimation.

A total capability of the baseband processor of the terminal is limited. The total capability of the baseband processor has a plurality of meanings. For example, the total capability of the baseband processor may include at least one of the following: on all carriers, frequency bands, cells, cell groups, or bandwidth parts (bandwidth part, BWP) in one slot, a quantity of simultaneously transmitted PDSCHs or PUSCHs, a quantity of layers of simultaneously transmitted PDSCHs or PUSCHs, a total quantity of simultaneously processed control resource sets (control resource set, CORESET), a total quantity of DCI blind detection times, a total quantity of simultaneously processed channel state information-reference signals (channel state information-reference signal, CSI-RS), a total quantity of simultaneously processed CSI-RSs for beam management, a total quantity of simultaneously activated transmission configuration indication (transmission configuration indication, TCI) states, a total quantity of simultaneously processed tracking reference signals (tracking reference signal, TRS), a total quantity of simultaneously processed sounding reference signals (sounding reference signal, SRS), a total quantity of simultaneously transmitted PUCCHs, a total quantity of simultaneously transmitted SRSs, a total quantity of simultaneously transmitted acknowledgments (acknowledge, ACK)/negative acknowledgments (negative acknowledge, NACK), a total quantity of pieces of simultaneously fed back channel state information (channel state information, CSI), a total quantity of simultaneously supported hybrid automatic repeat request (hybrid automatic repeat request, HARQ) processes.

### 6. Bandwidth part (bandwidth part, BWP)

ABWP is a group of consecutive frequency domain resources on a carrier. For example, the BWP is a group of consecutive resource blocks (resource block, RB) on a carrier, or a group of consecutive subcarriers on a carrier, or a group of consecutive resource block groups (resource block group, RBG) on a carrier. For example, in a cell, a maximum of four BWPs may be configured for one terminal. At any moment, one BWP can be activated in a cell, and the terminal and a base station receive and send data in the activated BWP.

For example, in a carrier bandwidth, one BWP may be configured for one terminal. A bandwidth of the BWP is less than or equal to a terminal capability bandwidth, and the terminal capability bandwidth is less than or equal to the carrier bandwidth. Alternatively, in a carrier bandwidth, two BWPs may be configured for one terminal, and are referred to as a BWP 1 and a BWP 2. Bandwidths of the BWP 1 and the BWP 2 may overlap, or bandwidths of the BWP 1 and the BWP 2 do not overlap.

### 7. Control resource set pool (CORESET POOL)

A BWP is an operating bandwidth of a terminal, the CORESET is time-frequency resources used by the terminal to transmit control signaling on the BWP, and one BWP may include a plurality of CORESETs. In a multi-TRP scenario, there is a concept of a CORESET pool. Each CORESET pool is considered as time-frequency resources used by the terminal to transmit control signaling to one TRP on the BWP. Each BWP includes at least one CORESET pool, and each CORESET pool includes at least one CORESET.

### 8. Time unit

A unit of the time unit may be a unit such as a radio frame (radio frame), a subframe (subframe), a slot (slot), a mini-slot (mini-slot), or a symbol (symbol). For example, in a specific implementation, one time unit may include two slots or the like. One radio frame may include one or more subframes, and one subframe may include one or more slots. There may be different slot length for different subcarrier spacings. For example, one slot may be 1 millisecond (ms) when a subcarrier spacing is 15 kHz; or one slot may be 0.5 ms when a subcarrier spacing is 30 kHz. One slot may include one or more symbols. For example, a slot with a normal cyclic prefix (cyclic prefix, CP) may include 14 time domain symbols, and a slot with an extended CP may include 12 time domain symbols. The time domain symbol may be referred to as a symbol for short. The time domain symbol may be an orthogonal frequency division multiplexing (orthogonal frequency division multiplexing, OFDM) symbol, or may be a discrete Fourier transform spread orthogonal frequency division multiplexing (discrete Fourier transform spread orthogonal frequency division multiplexing, DFT-s-OFDM) symbol. In embodiments of this application, an example in which the time domain symbol is an OFDM symbol may be used for description. A mini-slot, also referred to as a mini-slot, may be a smaller unit than a slot, and one mini-slot may include one or more symbols. For example, one mini-slot may include two symbols, four symbols, seven symbols, or the like. One slot may include one or more mini-slots.

In a solution, a base station implements configuration, reconfiguration, or the like of the CA, DC, MC, or multi-TRP by using RRC signaling. The CA is used as an example. The base station may configure aggregation of a CC 1 and a CC 2 by sending RRC signaling to a terminal. When receiving the RRC signaling, the terminal transmits data to the base station through both the CC 1 and the CC 2. For example, the terminal may simultaneously receive PDSCHs from the base station through the CC 1 and the CC 2, so that the terminal can simultaneously receive two PDSCHs. A baseband processing capability of the terminal is limited. For example, the terminal can receive only five PDSCHs from the base station simultaneously. Therefore, how to switch between resources in the baseband processing capability of the terminal in real time based on a network status, to implement efficient utilization of the baseband processing capability of the terminal is a technical problem to be resolved in this application. For example, when a network status changes, for example, when a frequency band corresponding to the CC 2 is congested or channel quality of the frequency band corresponding to the CC 2 is poor, a configuration of receiving one PDSCH on the CC 2 may be changed to a configuration of not receiving a PDSCH, and a configuration of receiving one PDSCH on the CC 1 may be changed to a configuration of receiving two PDSCHs, to efficiently use the baseband processing capability of the terminal.

This application provides a communication method, including: preconfiguring at least one type of configuration for the terminal based on the baseband processing capability reported by the terminal; subsequently indicating a different configuration to the terminal in real time based on a network status; and performing, by the terminal, communication with the base station by using the indicated configuration. According to the foregoing solution, different configurations corresponding to the baseband processing capability of the terminal may be dynamically switched based on different network statuses, so that the baseband processing capability of the terminal is flexibly and efficiently used, the baseband processing capability of the terminal is efficiently used, and uplink and downlink throughputs and user experience of the terminal are improved.

As shown in FIG. 2, a procedure of a communication method is provided, including at least the following steps.

Step 200: A terminal reports a terminal capability to a base station. Correspondingly, the base station receives the terminal capability reported by the terminal. The terminal capability may be a capability in a frequency band combination. One frequency band combination includes one or more frequency bands or carriers, and corresponds to at least one cell, cell group, or BWP of the terminal. Step 200 is optional.

For example, the terminal capability includes at least one of the following capabilities of the terminal:
a capability for a PDSCH, for example, a maximum quantity of received PDSCHs;
a capability for a PUSCH, for example, a maximum quantity of sent PUSCHs;
a capability for DCI blind detection on a CORESET pool, for example, a maximum quantity of CORESET pools for DCI blind detection;
a transmission capability for space division multiplexing, for example, a maximum quantity of transport layers for space division multiplexing;
a capability for a tracked TCI state, for example, a maximum quantity of tracked TCI states; or
a capability for a HARQ process, for example, a maximum quantity of HARQ processes.

In this application, a manner of reporting the terminal capability by the terminal includes at least the following: For example, if the terminal capability includes the capability for a PDSCH, the terminal may report a plurality of groups of capabilities to the base station for one frequency band combination, and each group of capabilities corresponds to a maximum quantity of PDSCHs simultaneously received on a carrier. For example, if one frequency band combination includes three carriers, the terminal may report three groups of capabilities to the base station, and each group of capabilities includes a capability of the terminal to receive a PDSCH on a corresponding carrier. For example, the terminal reports one group of terminal capabilities for a carrier 1, and the group of terminal capabilities includes a maximum quantity N1 of PDSCHs received by the terminal on the carrier 1. The terminal reports one group of terminal capabilities for a carrier 2, and the group of terminal capabilities includes a maximum quantity N2 of PDSCHs received by the terminal on the carrier 2. The terminal reports one group of terminal capabilities for a carrier 3, and the group of terminal capabilities includes a maximum quantity N3 of PDSCHs received by the terminal on the carrier 3. Alternatively, for one frequency band combination, the terminal reports a plurality of groups of capabilities. One group of capabilities includes a plurality of capability parameters, and each capability parameter includes a maximum quantity of PDSCHs transmitted on a corresponding frequency band. For example, if one frequency band combination includes two carriers, which are referred to as a carrier 1 and a carrier 2, the terminal reports two groups of capabilities: {2, 0} and {1, 1}. Each group of capabilities includes two capability parameters, and each capability parameter represents a maximum quantity of PDSCHs transmitted on a corresponding carrier. For example, {2, 0} specifically indicates that the terminal supports transmission on only the carrier 1, and does not support transmission on the carrier 2. That is, the terminal supports simultaneous transmission of a maximum of two PDSCHs on the carrier 1, and the terminal does not support PDSCH transmission on the carrier 2. {1, 1} specifically indicates that the terminal supports aggregation of the carrier 1 and the carrier 2, but supports simultaneous transmission of only one PDSCH on each of the carrier 1 and the carrier 2.

Alternatively, the terminal reports one group of capabilities in one frequency band combination. The group of capabilities indicates a sum of capabilities of all carriers included in the frequency band combination. The foregoing example is still used. A frequency band combination includes three carriers, a maximum quantity of PDSCHs received by the terminal on a carrier 1 is N1, a maximum quantity of PDSCHs received by the terminal on a carrier 2 is N2, and a maximum quantity of PDSCHs received by the terminal on a carrier 3 is N3. In this case, the terminal reports one group of capabilities to the base station. The group of capabilities includes a sum N of the maximum quantities of PDSCHs received by the terminal on the three carriers included in the frequency band combination, and a value of N is a sum of N1, N2, and N3. Alternatively, for example, for a frequency band combination including a carrier 1 and a carrier 2, the terminal reports one group of capabilities {2}, which indicates that a total maximum quantity of PDSCHs that can be simultaneously transmitted by the terminal on the carrier 1 and the carrier 2 is 2.

For example, the terminal reports a plurality of groups of parameters for one frequency band combination, and parameters of different groups indicate different capabilities of the terminal in the frequency band combination. For example, a parameter group may be carried in a feature set combination (FeatureSetCombination) information element. Each parameter group includes a related capability parameter group of the terminal on each frequency band or carrier. For example, the FeatureSetCombination information element includes a CC downlink feature set (FeatureSetDownlinkPerCC) information element. The FeatureSetDownlinkPerCC information element indicates a PDSCH-related capability on a corresponding carrier, and specifically, may include a maximum quantity of simultaneously transmitted PDSCHs supported by the terminal on the corresponding carrier. When the terminal supports simultaneous transmission of more than one PDSCH, the plurality of PDSCHs may completely overlap or partially overlap in time domain, and may completely overlap, partially overlap, or not overlap in frequency domain. Different types of maximum quantities of simultaneously transmitted PDSCHs may be separately reported, or may be jointly reported, or the like. Optionally, a null PDSCH-related parameter indicates that a maximum quantity of PDSCHs supported by the terminal on the carrier is 0. Alternatively, for all carriers in a frequency band combination, the terminal reports a total maximum quantity of simultaneously transmitted PDSCHs supported by the terminal. That the PDSCHs that can be simultaneously transmitted may partially overlap or completely overlap in time domain and/or frequency domain, and the like includes three cases: 1. Any two PDSCHs completely or partially overlap in time domain, and overlap in frequency domain. 2. Any two PDSCHs completely or partially overlap in time domain, and partially overlap in frequency domain. 3. Any two PDSCHs completely or partially overlap in time domain, and do not overlap in frequency domain. Different types of maximum quantities of simultaneously transmitted PDSCHs may be separately reported, or may be jointly reported, or the like.

It should be noted that, in the foregoing descriptions, a manner of a frequency band combination is used as an example to describe reporting the terminal capability by the terminal, and this is not intended to limit this application. For example, the terminal further reports the terminal capability in a manner such as a frequency band combination, a carrier combination, or a combination of a frequency band and a carrier.

It should be noted that, in the foregoing descriptions, an example in which the terminal reports the terminal capability by using a carrier as a granularity is used for description. Alternatively, a granularity of reporting the terminal capability may be a cell, a frequency band, a cell group, a BWP, or the like. For example, the terminal may report, to the base station, a maximum quantity of PDSCHs supported for transmission on each frequency band, or a maximum quantity of PDSCHs supported for transmission in each cell, or a maximum quantity of PDSCHs supported for transmission in each cell group, or a maximum quantity of PDSCHs transmitted in each BWP. In descriptions of this application, a relationship between a frequency band, a carrier, a CC, a cell, a cell group, or a BWP is described as follows. For example, a frequency band range of FR1 is from 410 MHz to 7125 MHz, and includes dozens of frequency bands. For example, a frequency band n18 is 815 MHz to 830 MHz. A frequency band range of FR2 is from 24250 MHz to 52600 MHz, and includes six frequency bands. For example, a frequency band n257 is 26500 MHz to 29500 MHz. Each frequency band includes a plurality of carriers, and each carrier corresponds to a transmission bandwidth (transmission bandwidth) and a center frequency. In CA, aggregation of a plurality of carriers is involved. Each carrier is referred to as a component carrier (component carrier, CC), and each CC corresponds to an independent cell. Generally, one CC may be equivalent to one cell. In a DC scenario, there is a concept of a cell group. A cell group served by a master node includes a master cell group and a secondary cell group, and a cell group served by a secondary node includes a master cell group and a secondary cell group. Each cell group includes at least one cell. The BWP is a new concept introduced in NR, and a meaning of the BWP is a part of a bandwidth. The meaning of the BWP is that, relative to a system bandwidth, the terminal uses only a bandwidth part of the system bandwidth. In this way, costs of the terminal can be reduced, and power consumption of the terminal can be reduced. A plurality of BWPs may be configured for each cell of each terminal, but one BWP is activated at a same moment, and the terminal communicates with the base station in the cell through the activated BWP. It may be simply considered that there is the following relationship between a frequency band, a carrier, a CC, a cell, a cell group, or a BWP: One frequency band includes one or more carriers, a carrier may also be referred to as a CC, one carrier corresponds to one cell, and a cell may belong to a cell group. That is, there may be a correspondence between the cell and the cell group. One cell may include one or more BWPs, and there is a correspondence between the cell and the BWP.

Step 201: The terminal receives first signaling from the base station, where the first signaling indicates at least one type of configuration. Correspondingly, the base station sends the first signaling to the terminal.

In a design, the first signaling is RRC signaling, and the at least one type of configuration includes at least one of the following:
a quantity of PDSCHs, for example, a quantity of received PDSCHs, where optionally, when there are a plurality of PDSCHs, the plurality of PDSCHs partially overlap or completely overlap at a same moment or in a same time unit in time domain;
a quantity of PUSCHs, for example, a quantity of sent PUSCHs, where optionally, when there are a plurality of PUSCHs, the plurality of PUSCHs partially overlap or completely overlap at a same moment or in a same time unit in time domain;
a quantity of CORESET pools for DCI blind detection, where optionally, when there are a plurality of CORESET pools, time units for DCI blind detection on the plurality of CORESET pools partially overlap or completely overlap at a same moment or in a same time unit;
a quantity of transport layers for space division multiplexing;
a quantity of tracked TCIs; or
a quantity of HARQ processes, or the like.

It should be noted that, in this application, the baseband processing capability of the terminal is a total capability of the terminal to process a PDSCH, a PUSCH, and the like at a moment. If simultaneous transmission does not occur in time, this cannot be referred to as sharing of the baseband processing capability. Therefore, in the descriptions of this application, completely or partially overlapping in time domain is reflected in sharing of the terminal capability by a plurality of PDSCHs, PUSCHs, CORESET pools, and the like at a same moment or in a same time unit.

In this application, the base station may determine the at least one type of configuration based on the terminal capability reported by the terminal.

In a design, the base station may indicate at least one type of configuration for each cell based on the terminal capability reported by the terminal. For example, the terminal capability reported by the terminal to the base station indicates that in a cell 1, a maximum quantity of PDSCHs received by the terminal is 10, and the base station may configure a plurality of configurations for the cell 1 based on the maximum quantity 10 of received PDSCHs that is reported by the terminal. For example, specific configurations are a configuration 1, a configuration 2, and a configuration 3. In the configuration 1, a quantity of PDSCHs received by the terminal in the cell 1 is 5. In the configuration 2, a quantity of PDSCHs received by the terminal in the cell 1 is 6. In the configuration 3, a quantity of PDSCHs received by the terminal in the cell 1 is 7. It should be noted that no matter which configuration is used, the capability reported by the terminal should be met. That is, a quantity of PDSCHs received by the terminal in the cell 1 is less than the maximum quantity 10 of PDSCHs received in the cell 1 that is reported by the terminal. Alternatively, configuration is not limited by the capability reported by the terminal, but subsequent activation needs to be limited by the capability reported by the terminal. That is, the base station does not activate a configuration that exceeds the capability reported by the terminal. For example, the base station configures at least one type of configuration for a first cell. The first signaling indicates a correspondence between the at least one type of configuration of the first cell and an index, and the at least one type of configuration of the first cell is determined based on the terminal capability reported by the terminal. In step 202 below, the base station sends second signaling to the terminal, where the second signaling includes indication information of a first index. The terminal determines a first configuration corresponding to the first index based on the correspondence that is between the at least one type of configuration of the first cell and the index and that is indicated by the base station. The terminal works in the first configuration in the first cell.

Alternatively, for a frequency band combination including a carrier 1 and a carrier 2, the base station may determine three groups of configurations for each of the carrier 1 and the carrier 2. The three groups of configurations of the carrier 1 are a first group of configurations {2}, a second group of configurations {1}, and a third group of configurations {1}, and the three groups of configurations of the carrier 2 are a first group of configurations {0}, a second group of configurations {1}, and a third group of configurations {0}. The base station may first activate the first groups of configurations of the two carriers for transmission. When receiving the second signaling that is sent by the base station in step 202 below, according to an indication of the second signaling, the terminal switches a configuration of the carrier 1 from the first group of configurations to the second group of configurations, and switches a configuration of the carrier 2 from the first group of configurations to the second group of configurations, so that the base station activates the second groups of configurations of the two carriers for transmission.

It should be noted that, for the first capability reporting solution, a value in each group of configurations should not exceed a capability that is for the carrier in a corresponding capability parameter group and that is reported by the terminal. For the second capability reporting solution, a sum of values in a same group of configurations of all carriers should not exceed the capability reported by the terminal. The foregoing example is still used. A frequency band combination includes a carrier 1 and a carrier 2, and the base station determines three groups of configurations for each of the carrier 1 and the carrier 2. In this case, a first group of configurations {2} of the carrier 1 and a first group of configurations {0} of the carrier 2 may be considered as a same group of configurations. Similarly, a second group of configurations of the carrier 1 and a second group of configurations of the carrier 2 are also considered as a same group of configurations, and a third group of configurations of the carrier 1 and a third group of configurations of the carrier 2 are also considered as a same group of configurations. A total quantity of simultaneously transmitted PDSCHs in a same group of configurations should not exceed a total capability reported by the terminal in the second capability reporting solution. Alternatively, for this frequency band combination, each group of configurations does not need to comply with the capability reported by the terminal. However, subsequently, the base station sends the second signaling to the terminal in step 202 below. When different carriers are dynamically activated, all carriers simultaneously activated by the terminal need to meet the capability reported by the terminal.

In this application, a maximum quantity of PDSCHs simultaneously transmitted on an activated primary carrier, primary cell, or master cell group is at least one. A maximum quantity of PDSCHs simultaneously transmitted on an activated secondary carrier, secondary cell, or secondary cell group may be 0.

In another design, the base station may determine a correspondence between different BWPs and configurations based on the terminal capability reported by the terminal. Configurations corresponding to different BWPs in the first cell are determined based on the terminal capability reported by the terminal. For example, if the terminal reports the terminal capability at a granularity of a cell, a carrier, or a CC, the carrier or the CC corresponds to one cell, and each cell includes at least one BWP, the terminal configures a corresponding configuration for the at least one BWP in the cell based on a maximum quantity of received PDSCHs reported in a cell, a carrier, or a CC, but the capability reported by the terminal should be met. For example, a cell includes a first BWP and a second BWP, and the terminal reports, to the base station, that a maximum quantity of PDSCHs received by the terminal in the cell is 5. In this case, the base station determines, based on a capability of the cell, that a configuration of the first BWP included in the cell is a configuration 1, and a configuration of the second BWP included in the cell is a configuration 2. For example, the configuration 1 is that a quantity of PDSCHs received by the terminal in the first BWP is 2, and the configuration 2 is that a quantity of PDSCHs received by the terminal in the second BWP is 3. In this design, in step 202 below, the base station sends an index corresponding to an activated BWP to the terminal, and the index may be referred to as the first index. When determining the first index based on the first signaling, the terminal determines the first BWP corresponding to the first index, and activates the first BWP. In addition, the terminal works in the first BWP in the configuration 1 that has a correspondence with the first BWP. In this design, there is no need to design dedicated signaling to indicate switching between different configurations, and switching between different configurations may be indirectly indicated by using existing BWP switching signaling, to reduce signaling overheads.

In this application, configurations of different BWPs may be the same or different, and should meet the capability reported by the terminal. For the first capability reporting solution, a value of each BWP should not exceed a capability that is for the frequency band, s carrier, a corresponding cell, or a cell group in a corresponding capability parameter group and that is reported by the terminal. For the second capability reporting solution, a sum of values of BWPs of a same group of BWPs on all frequency bands, carriers, or corresponding cells, cell groups, or BWPs should not exceed the capability reported by the terminal. Alternatively, for a frequency band combination, or a frequency band, a carrier, a corresponding cell, or a cell group in the frequency band combination, a configured BWP does not need to comply with the capability reported by the terminal. However, in subsequent step 202, when the base station dynamically activates or switches between different BWPs, all BWPs simultaneously activated by the terminal need to meet the capability reported by the terminal.

It should be noted that for the simultaneously activated BWPs, a maximum quantity of PDSCHs simultaneously transmitted in a BWP corresponding to a primary carrier, a primary cell, or a master cell group is at least one. A maximum quantity of PDSCHs simultaneously transmitted on a secondary carrier, a secondary cell, or a secondary cell group may be 0.

Step 202: The terminal receives the second signaling from the base station, where the second signaling indicates the first configuration in the at least one type of configuration. Correspondingly, the base station sends the second signaling to the terminal.

In this application, the second signaling includes DCI, a MAC control element (control element, CE), or the like. The base station sends a MAC CE, DCI, or the like to the terminal based on a network status, to dynamically switch between different configurations. The base station may send a MAC CE, DCI, or the like to the terminal in real time based on a network status, to indicate different configurations to the terminal. For example, at a moment 1, the base station may determine, based on a network status, that the baseband processing capability of the terminal can be better used when the terminal works in the first configuration. In this case, the base station may send a MAC CE or DCI to the terminal to indicate the first configuration. When receiving the MAC CE or the DCI, the terminal works in the first configuration. Then, at a moment 2, the network status changes, and the base station determines that the baseband processing capability of the terminal can be better used when the terminal works in a second configuration. In this case, the base station may send a MAC CE, DCI, or the like to the terminal, to indicate the second configuration. When receiving the MAC CE or the DCI, the terminal switches from the first configuration to the second configuration. The terminal may switch between different configurations in real time based on an indication of the MAC CE or the DCI from the base station. Compared with a current solution of an RRC semi-static configuration manner, utilization of the baseband processing capability of the terminal can be improved, and uplink and downlink throughputs and the like can be improved.

For example, the base station performs transmission to the terminal simultaneously through two downlink carriers: a carrier 1 and a carrier 2. Three groups of configurations of the carrier 1 are {2}, {1}, and {1}, and three groups of configurations of the carrier 2 are {0}, {1}, and {0}. The base station may activate configurations 1 of the two carriers for transmission. That is, a quantity of PDSCHs simultaneously transmitted by the terminal on the carrier 1 is 2, and a quantity of PDSCHs simultaneously transmitted on the carrier 2 is 0. The base station detects, by collecting a network status, that the carrier 1 is congested, and the base station may send DCI or MAC CE signaling to the terminal, to indicate the terminal to switch to the second groups of configurations on both the carrier 1 and the carrier 2. In the second group of configurations, the terminal receives one PDSCH on each of the carrier 1 and the carrier 2, to effectively alleviate congestion on the carrier 1 and improve a transmission rate. In this design, signaling such as a MAC CE or DCI may specifically indicate an index of a mode that needs to be switched to.

Alternatively, in another design, for the foregoing solution in which the BWP is introduced, a solution of configuring different configurations for different BWPs is provided in advance. In the method, the MAC CE or the DCI may indicate switching between different BWPs. For example, when the terminal receives the MAC CE or the DCI, the MAC CE or the DCI indicates the terminal to switch to a BWP 2. In this case, the terminal switches from a currently working BWP 1 to the BWP 2, and obtains a configuration that is preconfigured for the BWP 2 or that has a correspondence with the BWP 2. Then, the terminal works in a specific configuration in the BWP 2. In this design, the MAC CE or the DCI indicates an index of a BWP. For example, the base station performs transmission to the terminal simultaneously through two downlink carriers: a CC 1 and a CC 2. Three BWPs are configured on each carrier. Three BWPs on the carrier 1 are BWP1_CC1, BWP2_CC1, and BWP3_CC1, and configured maximum quantities of received PDSCHs are {2}, {1}, and {1}. Three BWPs on the carrier 2 are BWP1_CC2, BWP2_CC2, and BWP3_CC2, and configured maximum quantities of transmitted PDSCHs are {0}, {1}, and {0}. In a solution, the base station first activates the BWP1_CC1 and the BWP1_CC2. Then, the base station sends MAC CE and DCI signaling to the terminal based on a real-time network status such as a load and channel quality, to indicate the terminal to switch from the BWP1_CC1 to the BWP2_CC2. In this case, the terminal switches from the BWP1_CC1 to the BWP2_CC2, and works in a corresponding configuration in the BWP2_CC2.

Step 203: The terminal communicates with the base station based on the first configuration. Correspondingly, the base station communicates with the terminal based on the first configuration.

In this application, an example in which the first configuration includes the maximum quantity of transmitted PDSCHs is used. The foregoing example is still used. If a frequency band combination includes a carrier 1 and a carrier 2, a first group of configurations on the carrier 1 is {2}, and a first group of configurations on the carrier 2 is {0}. When working in the first configuration, the terminal simultaneously receives two PDSCHs on the carrier 1, and does not receive a PDSCH on the carrier 2.

It should be noted that, in the foregoing descriptions, the maximum quantity of PDSCHs transmitted by the terminal is reported or configured at a granularity of a carrier. For example, the terminal reports a maximum quantity of PDSCHs transmitted on each carrier, or the base station allocates, to the terminal, a maximum quantity of PDSCHs transmitted on each carrier, and the like. This is not intended to limit this application. In this application, the terminal capability may be further reported or the base station configures the terminal capability for the terminal at a granularity such as a frequency band, a cell, a cell group, or a BWP. For example, the terminal may report a maximum quantity of PDSCHs transmitted on each frequency band, cell, cell group, or BWP. Alternatively, the base station may configure a maximum quantity of PDSCHs or the like transmitted on each frequency band, cell, cell group, or BWP.

In this application, a PDSCH baseband capability of the terminal on a plurality of frequency bands or carriers can be shared. Therefore, the base station can dynamically adjust, in real time based on information such as a channel and a load, a frequency band or a carrier serving the terminal, and apply the baseband capability of the terminal to a most proper frequency band or carrier, to avoid a waste of the baseband processing capability of the terminal. A total transmission rate of an air interface can be increased, a service delay can be reduced, and dynamic load balancing can be implemented.

It should be noted that, in the procedure in FIG. 2, an example in which the base station configures the at least one type of configuration for the terminal by using the first signaling, subsequently the base station indicates any one of the at least one type of configuration to the terminal by using the second signaling, and the terminal works and communicates with the base station in the configuration indicated by the second signaling is used, and is not intended to limit this application. For example, the base station configures a configuration for the terminal by using the first signaling, and the terminal may directly work in the configuration without being indicated by using the second signaling, to further reduce signaling overheads.

In a design, the solution shown in FIG. 2 may be applied to a single-TRP scenario. For multi-TRP, impact of a TRP may further need to be considered when the terminal capability is reported and the base station allocates a configuration to the terminal. In a single-TRP case, the baseband capability is shared only in frequency domain. A space domain dimension is introduced due to the multi-TRP, and the baseband capability is shared in both frequency domain and space domain. The baseband capability needs to be dynamically allocated on different frequency bands/carriers of different TRPs, to further improve flexibility of baseband capability sharing. For example, a main difference between the multi-TRP scenario and the solution shown in FIG. 2 lies in that when the terminal reports a capability of the terminal to the base station, the capability needs to include a multi-TRP-related parameter supported by the terminal on each frequency band or carrier, for example, a quantity of TRPs that can be simultaneously connected to the terminal on this frequency band or carrier, or a maximum quantity of PDSCHs that can be received on each CORESET pool. Subsequently, when determining the at least one type of configuration based on the capability reported by the terminal, the network device needs to consider impact of the TRP. For example, the base station configures a quantity of PDSCHs for the terminal. In a single-TRP scenario, if simultaneous receiving of two PDSCHs is configured for one carrier, the carrier may transmit the two PDSCHs in a frequency division manner. For example, the carrier is divided into two frequency domain resources, the first frequency domain resource is used to transmit a PDSCH 1, and the second frequency domain resource is used to transmit a PDSCH 2. However, in the multi-TRP scenario, if simultaneous receiving of two PDSCHs is configured for one carrier, the two PDSCHs may use a space division manner. For example, if a CC 1 is configured for two TRPs, the terminal may be configured to: receive a PDSCH 1 on the CC 1 through a TRP 1, and also receive a PDSCH 2 on the CC 1 through a TRP 2. When the method in the procedure shown in FIG. 2 is applied to the multi-TRP scenario, this application provides a method for enabling dynamic sharing of a PDSCH baseband processing capability in frequency domain and space domain, and the method includes at least the following steps.
I: The terminal reports a terminal capability to the base station. The terminal capability is a capability of the terminal in a frequency band combination. One frequency band combination includes one or more frequency bands or carriers, and corresponds to one or more cells, cell groups, or BWPs of the terminal.

Method 1 for reporting the terminal capability: The terminal reports a plurality of capability parameter groups. Each capability parameter group corresponds to one frequency band or carrier in the frequency band combination, and includes a multi-TRP-related capability of the terminal on the frequency band or carrier.

For example, in the Method 1 for reporting the terminal capability, for one frequency band combination, the terminal reports a plurality of capability parameter groups. Each capability parameter group corresponds to one frequency band or carrier in the frequency band combination, and includes a plurality of terminal capabilities of the terminal on the frequency band or carrier. For example, a set of the plurality of capability parameter groups may be FeatureSetCombination, and each capability parameter group FeatureSetDownlinkPerCC includes a plurality of terminal capabilities on each frequency band or carrier. The plurality of terminal capabilities include a multi-TRP-related capability, and a multi-TRP-related capability parameter group may be multi-TRP.
1. The multi-TRP may include a maximum quantity of CORESET pools supported by the terminal on the frequency band, the carrier, a cell, a cell group, or a BWP, and represents a maximum quantity of TRPs to which the terminal can be simultaneously connected on the frequency band, the carrier, or the cell.
2. The multi-TRP may include a maximum quantity of CORESETs that can be configured for the terminal on the frequency band, the carrier, the cell, or the BWP.
3. The multi-TRP may include a maximum quantity of CORESETs that can be configured for the terminal on each CORESET pool of the frequency band, the carrier, the cell, or the BWP.
4. The multi-TRP may include a maximum quantity of PDSCHs that can be sent by the terminal on each CORESET pool of the frequency band, the carrier, the cell, or the BWP.

Method 2 for reporting the terminal capability: The terminal reports a plurality of capability parameters. Each capability parameter corresponds to one capability, a multi-TRP-related capability parameter group includes a plurality of parameter sub-groups, and each parameter sub-group corresponds to a multi-TRP-related capability on one frequency band or carrier in the frequency band combination.

For example, in Method 2 for reporting the terminal capability, for one frequency band combination, the terminal reports a plurality of capability parameter groups. Each capability parameter group corresponds to one terminal capability. For example, a parameter group multi-TRP-PerBC corresponds to a terminal capability corresponding to the multi-TRP in the frequency band combination. Each capability parameter group includes a plurality of parameter sub-groups, and each parameter sub-group corresponds to one frequency band or carrier. For example, the parameter group multi-TRP-PerBC includes a parameter sub-group multi-TRP-PerCC, and the parameter sub-group multi-TRP-PerCC corresponds to a terminal capability corresponding to the multi-TRP on each frequency band or carrier.
1. The multi-TRP-PerCC may include a maximum quantity of CORESET pools supported by the terminal on the frequency band, the carrier, a cell, or a BWP, and represents a maximum quantity of TRPs to which the terminal can be simultaneously connected on the frequency band, the carrier, or the cell.
2. The multi-TRP-PerCC may include a maximum quantity of CORESETs that can be configured for the terminal on the frequency band, the carrier, the cell, or the BWP.
3. The multi-TRP-PerCC may include a maximum quantity of CORESETs that can be configured for the terminal on each CORESET pool of the frequency band, the carrier, the cell, or the BWP.
4. The multi-TRP-PerCC may include a maximum quantity of PDSCHs that can be sent by the terminal on each CORESET pool of the frequency band, the carrier, the cell, or the BWP.

II. The base station receives the capability reported by the terminal, and configures and schedules the terminal based on the capability reported by the terminal.

Configuration and scheduling method 1: The base station implements sharing of a PDSCH baseband capability of the terminal between a plurality of frequency bands or TRPs by activating or deactivating a cell configuration. For example, for one frequency band or carrier in a frequency band combination, the base station may configure a plurality of groups of serving cell configurations for the terminal based on a plurality of parameter groups. Each group of serving cell configurations includes a set of secondary cell configurations without a PDSCH, and does not include a set of primary cell configurations without a PDSCH, but only one set of serving cell configurations can be activated at a time. A sum of quantities of PDSCHs that can be simultaneously transmitted in all cells that are simultaneously activated by the base station on all frequency bands or carriers in a frequency band combination needs to meet a terminal capability corresponding to a parameter group.

Configuration and scheduling method 2: The base station implements sharing of a PDSCH baseband capability of the terminal between a plurality of frequency bands, carriers, or TRPs by activating and/or deactivating a BWP. In this case, for a frequency band or carrier in a frequency band combination, or a serving cell, the base station may configure a plurality of BWPs for the terminal based on a plurality of parameter groups. A secondary cell may include a BWP without a PDSCH, and a primary cell does not include a BWP without a PDSCH. A sum of quantities of PDSCHs that can be simultaneously transmitted in all BWPs simultaneously activated by the base station needs to meet a terminal capability corresponding to a parameter group.

In this method embodiment, sharing of the PDSCH baseband capability of the terminal between a plurality of frequency bands or carriers and TRPs is implemented. Therefore, the base station can dynamically adjust, in real time based on information such as a channel and a load, a frequency band, a carrier, and a TRP that serve the terminal, and apply the baseband capability of the terminal to a most proper frequency band, carrier, and TRP, to avoid a waste of the baseband capability of the terminal. Finally, a total transmission rate of an air interface can be increased, a service delay can be reduced, and dynamic load balancing can be implemented.

This embodiment mainly includes the following improvements: In a first aspect, baseband capability information that is related to multi-TRP and a PDSCH and that is reported by the terminal is added, so that the base station performs precise dynamic control and sharing of the baseband capability of the terminal based on the added reported information. In a second aspect, in the multi-TRP scenario, the base station is allowed to perform scheduling on one frequency band or carrier by using at least two TRPs, and the base station is allowed to activate or deactivate different configurations by using L1 layer signaling, so that dynamic sharing of the PDSCH baseband capability of the terminal between different frequency bands or carriers and different TRPs is enabled.

For example, at least one mode configured by the base station for the terminal includes a tracked TCI state. This application provides a method for enabling dynamic sharing of a baseband processing capability in a TCI state (states) in frequency domain and space domain. The method includes at least the following steps.
I: The terminal reports a terminal capability to the base station. The terminal capability is a capability of the terminal in a frequency band combination. One frequency band combination includes one or more frequency bands or carriers, and corresponds to one or more cells, cell groups, BWPs, or the like of the terminal.

Method 1 for reporting the terminal capability: The terminal reports a plurality of capability parameter groups. Each capability parameter group corresponds to one frequency band or carrier in the frequency band combination, and includes a multi-TRP-related capability of the terminal on the frequency band or carrier.

For example, in Method 1 for reporting the terminal capability, for one frequency band combination, the user reports a plurality of capability parameter groups. Each capability parameter group corresponds to one frequency band or carrier in the frequency band combination, and includes a plurality of terminal capabilities of a user on the frequency band or carrier. For example, a set of the plurality of capability parameter groups may be FeatureSetCombination. Each capability parameter group FeatureSetDownlinkPerCC includes a plurality of terminal capabilities on each frequency band or carrier. The plurality of terminal capabilities include a multi-TRP-related capability, and a multi-TRP-related capability parameter group may be multi-TRP. The multi-TRP may include a maximum quantity of TCI states that can be supported by the user on each CORESET pool of the frequency band, the carrier, the cell, or the BWP.

Method 2 for reporting the terminal capability: The terminal reports a plurality of capability parameter groups. Each capability parameter group corresponds to one capability, a multi-TRP-related capability parameter group includes a plurality of parameter sub-groups, and each parameter sub-group corresponds to a multi-TRP-related capability on one frequency band or carrier in the frequency band combination.

For example, in Method 2 for reporting the terminal capability, for one frequency band combination, the user reports a plurality of capability parameter groups. Each capability parameter group corresponds to one terminal capability. For example, a parameter group multi-TRP-PerBC corresponds to a terminal capability corresponding to the multi-TRP in the frequency band combination. Each capability parameter group includes a plurality of parameter sub-groups, and each parameter sub-group corresponds to one frequency band or carrier. For example, the parameter group multi-TRP-PerBC includes a parameter sub-group multi-TRP-PerCC, and the parameter sub-group multi-TRP-PerCC corresponds to a terminal capability corresponding to the multi-TRP on each frequency band or carrier.

II. The base station receives the capability reported by the terminal, and configures and schedules the terminal based on the capability reported by the terminal.

Configuration and scheduling method 1: The base station may implement sharing of a TCI states capability of the terminal between a plurality of frequency bands, carriers, or TRPs by activating or deactivating a cell configuration. In this case, for one frequency band or carrier in one frequency band combination, the base station may configure a plurality of groups of TCI state configurations for the terminal based on a plurality of parameters, but only one group of TCI state configurations can be activated at a time. All TCI state configurations activated by the base station on all frequency bands or carriers in a frequency band combination need to meet a terminal capability corresponding to a parameter group.

Configuration and scheduling method 2: The base station may implement sharing of a TCI state capability of the terminal between a plurality of frequency bands or carriers by activating or deactivating a BWP. In this case, for a frequency band or carrier in a frequency band combination, or a serving cell, the base station may configure a plurality of BWPs for the terminal based on a plurality of parameter groups. All TCI configurations on BWPs simultaneously activated by the base station need to meet a terminal capability corresponding to a parameter group.

In this method implementation, sharing of the TCI state capability of the terminal between a plurality of frequency bands, carriers, or a plurality of TRPs is implemented. Therefore, the base station can dynamically adjust, in real time based on information such as a channel and a load, the terminal to track a TCI state on different frequency bands or carriers and different TRPs, and apply the baseband capability of the terminal to a most proper frequency band, carrier, or TRP, to avoid a waste of the baseband processing capability of the terminal. Finally, a transmission rate of an air interface is increased, a service delay is reduced, and dynamic balancing is implemented.

This embodiment of this application mainly includes the following improvements: In a first aspect, baseband capability information that is related to the multi-TRP and the TCI states and that is reported by the terminal is added, so that the base station performs precise dynamic control and sharing of the baseband capability of the terminal based on the added reported information. In a second aspect, in the multi-TRP scenario, the base station is allowed to schedule the terminal on one frequency band or carrier through at least two TRPs, and the terminal can track the TCI state on at least two TRPs. In a third aspect, the base station configures a plurality of sets of parameters or BWPs for a same serving cell of the terminal by using RRC signaling, and the base station is allowed to activate and deactivate different configurations by using L1 signaling, so that a TCI states tracking capability of the terminal is dynamically shared on different frequency bands or carriers and different TRPs.

For example, the at least one mode configured by the base station for the terminal includes a quantity of HARQ processes. This application further provides a method for enabling dynamic sharing of HARQ processes in frequency domain, and the method includes at least the following steps.
I: The terminal reports a terminal capability to the base station. The terminal capability is a capability of the terminal in a frequency band combination. One frequency band combination includes one or more frequency bands or carriers, and corresponds to one or more cells, cell groups, BWPs, or the like of the terminal.

In Method 1 for reporting the terminal capability, the terminal reports a plurality of groups of capabilities. One group of capabilities includes a plurality of capability parameters. One capability parameter corresponds to one frequency band or carrier in the frequency band combination, or corresponds to a cell, a cell group, or a BWP, and indicates a maximum quantity of HARQ processes that can be simultaneously transmitted by the terminal on the frequency band, carrier, cell, cell group, or BWP.

For example, for a frequency band combination, the terminal reports a plurality of parameter groups, and different parameter groups indicate different terminal capabilities of the terminal in the frequency band combination. For example, one of the parameter groups may be FeatureSetCombination. Each parameter group includes a related capability parameter group of the terminal on each frequency band or carrier. For example, FeatureSetCombination includes FeatureSetDownlinkPerCC. FeatureSetDownlinkPerCC indicates a HARQ process-related capability of the terminal on each frequency band or carrier. Specifically, a maximum quantity of HARQ processes that are supported by the terminal for simultaneous transmission on the frequency band or carrier may be included.

In Method 2 for reporting the terminal capability, the terminal reports one group of capabilities. The group of capabilities includes one capability parameter, and the capability parameter indicates a total maximum quantity of HARQs that can be simultaneously transmitted by the terminal on all frequency bands or carriers in the frequency band combination, corresponding cells, cell groups, or BWPs.

For example, for all frequency bands or carriers (or corresponding cells, cell groups, or BWPs) in a frequency band combination, the terminal reports a total maximum quantity of HARQ processes that are supported by the terminal for simultaneous transmission.

II. The base station receives the capability reported by the terminal, and configures and schedules the terminal based on the capability reported by the terminal.

Configuration and scheduling method 1: For any frequency band or carrier in the frequency band combination, or any corresponding cell or cell group, the base station may perform a plurality of groups of configurations. Each group of configurations indicates a maximum quantity of HARQ processes that can be simultaneously transmitted by the terminal on the frequency band, carrier, corresponding cell, or cell group. Values of configurations of different groups may be different. Each group of configurations needs to meet the capability reported by the terminal.

For Method 1 for reporting the terminal capability, a value in each group of configurations should not exceed a capability for the frequency band, carrier, corresponding cell, or cell group in a corresponding capability parameter group reported by the terminal.

For Method 2 for reporting the terminal capability, a sum of values in a same group of configurations on all frequency bands, carriers, corresponding cells, cell groups, or BWPs should not exceed the capability reported by the terminal.

For the frequency band combination, or a frequency band or carrier in the frequency band combination, or a corresponding cell or cell group, the base station sends MAC CE or DCI signaling to the terminal, to dynamically switch between different configurations.

Alternatively, for the frequency band combination, or a frequency band or carrier in the frequency band combination, or a corresponding cell or cell group, each group of configurations does not need to comply with the capability reported by the terminal. The base station sends MAC CE or DCI signaling to the terminal, to dynamically activate different frequency bands, carriers, cells, or cell groups. All frequency bands, carriers, or corresponding cells or cell groups that are simultaneously activated by the terminal need to meet the capability reported by the terminal.

In Configuration and scheduling method 2, for any frequency band or carrier in the frequency band combination, or any corresponding cell or cell group, the terminal may configure a plurality of BWPs, and configure a maximum quantity of HARQ processes that can be simultaneously transmitted in each BWP.

Values of different BWPs may be different, and should meet the capability reported by the terminal.

For Method 1 for reporting the terminal capability, a value of each BWP should not exceed a capability for the frequency band, carrier, corresponding cell, or cell group in a corresponding capability parameter group reported by the terminal.

For Method 2 for reporting the terminal capability, a sum of values of BWPs of a same group of BWPs on all frequency bands, carriers, corresponding cells, cell groups, or BWPs should not exceed the capability reported by the terminal.

For the frequency band combination, a frequency band or a carrier in the frequency band combination, a cell, or a cell group, the base station sends MAC CE or DCI signaling to the terminal, to dynamically switch different BWPs.

Alternatively, for the frequency band combination, or a frequency band or carrier in the frequency band combination, or a corresponding cell or cell group, the configured BWP does not need to comply with the capability reported by the terminal. The base station sends MAC CE or DCI signaling to the terminal, to dynamically activate or switch different BWPs. The terminal needs to simultaneously activate all BWPs to meet the capability reported by the terminal.

In this application, a HARQ process processing capability of the terminal is shared between a plurality of frequency bands/carriers. Therefore, the base station can dynamically adjust, in real time based on information such as a channel and a load, a frequency band or a carrier serving the terminal, and apply the baseband capability of the terminal to a most proper frequency band or carrier, to avoid a waste of the baseband capability of the terminal. Finally, a total transmission rate of an air interface can be increased, a service delay can be reduced, and dynamic load balancing can be implemented.

This application makes improvements in the following aspects. In a first aspect, baseband capability information that is related to a HARQ process and that is reported by the terminal is added, and a total capability on a plurality of frequency bands or carriers is reported, or a plurality of groups of capabilities on each frequency band or carrier are reported based on the total capability, so that the base station performs precise dynamic control and shares the terminal baseband capability based on the added reported information. In a second aspect, the base station configures a plurality of sets of parameters or BWPs for a same serving cell of the terminal by using RRC signaling, so that the base station is allowed to activate or deactivate different configurations by using L1 layer signaling, and dynamic sharing of a HARQ process processing capability of the terminal between different frequency bands or carriers is enabled.

It should be noted that this application focuses on dynamic sharing of baseband capabilities such as PDSCH transmission, TCI states tracking, and HARQ process maintenance in frequency domain and/or space domain. This does not constitute limitation on this application. For example, the solution in this application is further applicable to dynamic sharing of baseband capabilities such as PUSCH transmission, PDCCH detection, CSI-RS resource configuration, and a quantity of simultaneously processed transport layers in frequency domain and/or space domain.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

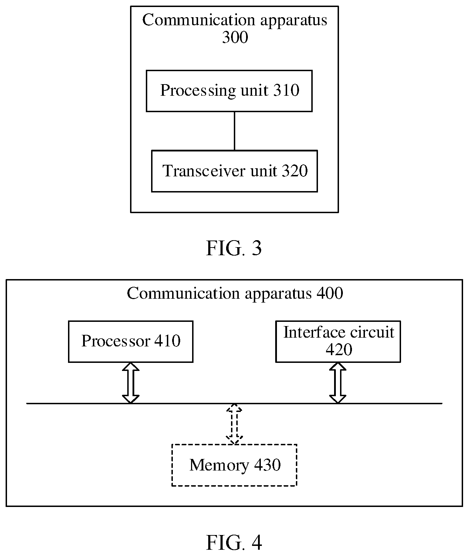

FIG. 3 and FIG. 4 are diagrams of structures of possible communication apparatuses according to embodiments of this application. These communication apparatuses may be configured to implement the function of the terminal or the base station in the foregoing method embodiment, and therefore can also achieve beneficial effects of the foregoing method embodiment. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 3, a communication apparatus 300 includes a processing unit 310 and a transceiver unit 320. The communication apparatus 300 is configured to implement the function of the terminal or the base station in the method embodiment shown in FIG. 2.

When the communication apparatus 300 is configured to implement the function of the terminal in the method embodiment shown in FIG. 2, the transceiver unit 320 is configured to: receive first signaling from a network device, where the first signaling indicates at least one type of configuration; and receive second signaling from the network device, where the second signaling indicates a first configuration included in the at least one type of configuration. The processing unit 310 is configured to communicate with the network device based on the first configuration. The at least one type of configuration includes at least one of the following:
a quantity of physical downlink shared channels PDSCHs;
a quantity of physical uplink shared channels PUSCHs;
a quantity of control resource set pools CORESET pools for downlink control information DCI blind detection;
a quantity of transport layers for space division multiplexing;
a quantity of tracked transmission configuration indication TCI states; or
a quantity of hybrid automatic repeat request HARQ processes.

When the communication apparatus 300 is configured to implement the function of the base station in the method embodiment shown in FIG. 2, the transceiver unit 320 is configured to: send first signaling to a terminal, where the first signaling indicates at least one type of configuration; and send second signaling to the terminal, where the second signaling indicates a first configuration included in the at least one type of configuration. The processing unit 310 is configured to communicate with the terminal based on the first configuration. The at least one type of configuration includes at least one of the following:
a quantity of physical downlink shared channels PDSCHs;
a quantity of physical uplink shared channels PUSCHs;
a quantity of control resource set pools CORESET pools for downlink control information DCI blind detection;
a quantity of transport layers for space division multiplexing;
a quantity of tracked transmission configuration indication TCI states; or
a quantity of hybrid automatic repeat request HARQ processes.

For more detailed descriptions of the processing unit 310 and the transceiver unit 320, directly refer to related descriptions of the method embodiment shown in FIG. 2. Details are not described herein again.

As shown in FIG. 4, a communication apparatus 400 includes a processor 410 and an interface circuit 420. The processor 410 and the interface circuit 420 are coupled to each other. It may be understood that the interface circuit 420 may be a transceiver or an input/output interface. Optionally, the communication apparatus 400 may further include a memory 430, configured to store instructions to be executed by the processor 410, store input data required for running the instructions by the processor 410, or store data generated after the processor 410 runs the instructions.

When the communication apparatus 400 is configured to implement the method shown in FIG. 2, the processor 410 is configured to implement a function of the processing unit 310, and the interface circuit 420 is configured to implement a function of the transceiver unit 320.

When the foregoing communication apparatus is a chip used in a terminal, the terminal chip implements a function of the terminal in the foregoing method embodiment. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the foregoing communication apparatus is a module used in a base station, the module used in the base station implements a function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
receiving first signaling from a network device, wherein the first signaling indicates at least one type of configuration;
receiving second signaling from the network device, wherein the second signaling indicates a first configuration comprised in the at least one type of configuration; and
communicating with the network device based on the first configuration, wherein
the at least one type of configuration comprises at least one of the following:
a quantity of physical downlink shared channels PDSCHs;
a quantity of physical uplink shared channels PUSCHs;
a quantity of control resource set pools CORESET pools for downlink control information DCI blind detection;
a quantity of transport layers for space division multiplexing;
a quantity of tracked transmission configuration indication TCI states; or
a quantity of hybrid automatic repeat request HARQ processes.

2. The method according to claim 1, wherein the first signaling comprises radio resource control RRC signaling, and the second signaling comprises media access control MAC control element CE signaling or DCI signaling.

3. The method according to claim 1 or 2, wherein the first signaling indicates a correspondence between at least one type of configuration of a first cell and an index, and the second signaling comprises indication information of an index corresponding to the first configuration.

4. The method according to claim 1 or 2, wherein the first signaling indicates a configuration of at least one bandwidth part BWP in a first cell, and the second signaling comprises indication information of an index corresponding to the BWP.

5. The method according to any one of claims 1 to 4, further comprising:
reporting a terminal capability to the network device, wherein the terminal capability comprises at least one of the following capabilities:
a capability for the PDSCH;
a capability for the PUSCH;
a capability for DCI blind detection on the CORESET pool;
a transmission capability for space division multiplexing;
a capability for the tracked transmission configuration indication TCI state; or
a capability for the hybrid automatic repeat request HARQ process.

6. The method according to any one of claims 1 to 5, wherein when there are a plurality of PDSCHs, the plurality of PDSCHs partially overlap or completely overlap in time domain; when there are a plurality of PUSCHs, the plurality of PUSCHs partially overlap or completely overlap in time domain; and when there are a plurality of CORESET pools, time units for DCI blind detection on the plurality of CORESET pools partially overlap or completely overlap.

7. A communication method, comprising:
sending first signaling to a terminal, wherein the first signaling indicates at least one type of configuration;
sending second signaling to the terminal, wherein the second signaling indicates a first configuration comprised in the at least one type of configuration; and
communicating with the terminal based on the first configuration, wherein
the at least one type of configuration comprises at least one of the following:
a quantity of physical downlink shared channels PDSCHs;
a quantity of physical uplink shared channels PUSCHs;
a quantity of control resource set pools CORESET pools for downlink control information DCI blind detection;
a quantity of transport layers for space division multiplexing;
a quantity of tracked transmission configuration indication TCI states; or
a quantity of hybrid automatic repeat request HARQ processes.

8. The method according to claim 7, wherein the first signaling comprises radio resource control RRC signaling, and the second signaling comprises media access control MAC control element CE signaling or DCI signaling.

9. The method according to claim 7 or 8, wherein the first signaling indicates a correspondence between at least one type of configuration of a first cell and an index, and the second signaling comprises indication information of an index corresponding to the first configuration.

10. The method according to claim 7 or 8, wherein the first signaling indicates a configuration of at least one bandwidth part BWP in a first cell, and the second signaling comprises indication information of an index corresponding to the BWP.

11. The method according to any one of claims 7 to 10, further comprising:
receiving a terminal capability reported by the terminal, wherein the terminal capability comprises at least one of the following capabilities of the terminal:
a capability for the PDSCH;
a capability for the PUSCH;
a capability for DCI blind detection on the CORESET pool;
a transmission capability for space division multiplexing;
a capability for the tracked transmission configuration indication TCI state; or
a capability for the hybrid automatic repeat request HARQ process.

12. The method according to any one of claims 7 to 11, wherein when there are a plurality of PDSCHs, the plurality of PDSCHs partially overlap or completely overlap in time domain; when there are a plurality of PUSCHs, the plurality of PUSCHs partially overlap or completely overlap in time domain; and when there are a plurality of CORESET pools, time units for DCI blind detection on the plurality of CORESET pools partially overlap or completely overlap.

13. A communication apparatus, comprising units configured to perform the method according to any one of claims 1 to 6, or units configured to perform the method according to any one of claims 7 to 12.

14. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 6 or the method according to any one of claims 7 to 12 by using a logic circuit or by executing code instructions.

15. A computer-readable storage medium, wherein the storage medium stores a computer program or instructions; and when the computer program or the instructions are executed by a communication apparatus, the method according to any one of claims 1 to 6 or the method according to any one of claims 7 to 12 is implemented.
